# EUROPÄISCHE PATENTSCHRIFT

(11) **EP 1 220 401 B1**
(45) Veröffentlichungstag und Bekanntmachung des Hinweises auf die Patenterteilung: **26.10.2005**
(21) Anmeldenummer: 01403268.4
(22) Anmeldetag: 14.12.2001
(51) Int. Cl.: H02G 3/06, B60R 16/02, B65D 43/00

(54) **Gehäuse aus Kunststoff**
Plastic housing
Boîtier en plastique

(30) Priorität: 21.12.2000 DE 20021572 U
(43) Veröffentlichungstag der Anmeldung: 03.07.2002
(73) Patentinhaber: Nexans, 75008 Paris (FR)
(72) Erfinder: Grüner, Claudius, Dipl.-Ing., 92699 Irchenrieth (DE)
(74) Vertreter: Döring, Roger

(56) Entgegenhaltungen:
- US-A- 5 639 993
- PATENT ABSTRACTS OF JAPAN vol. 018, no. 345 (E-1571), 29. Juni 1994 (1994-06-29) & JP 06 086425 A (YAZAKI CORP), 25. März 1994 (1994-03-25)

## Beschreibung

Die Erfindung bezieht sich auf ein Gehäuse aus Kunststoff zur Aufnahme von Leitungen, bestehend aus zwei Halbschalen, die durch mindestens zwei einrastende Elemente lösbar miteinander verbindbar sind, bei welchem die einrastenden Elemente jeweils aus einem an einer ersten Halbschale angebrachten, nach außen abstehenden Vorsprung sowie aus einem korrespondierenden, an der zweiten Halbschale außen angebrachten rahmenartigen Schließteil bestehen, dessen eine Begrenzung von der Halbschale selbst gebildet ist und der in Montageposition den Vorsprung der ersten Halbschale umgreift.

Derartige Gehäuse sind seit Jahren für unterschiedlichste Einsatzfalle bekannt und auf dem Markt erhältlich (JP-A-06086425 ; US-A-5 639 993). Sie werden in der eingangs beschriebenen Ausführungsform beispielsweise zum Schutz und zur Führung elektrischer Leitungen an Stellen verwendet, an denen die Leitungen sonst frei liegen würden und leicht mechanisch beschädigt werden könnten. Ein mögliches Einsatzgebiet sind beispielsweise Kraftfahrzeuge, bei denen elektrische Leitungen in der Karosserie und auch im Innenraum verlegt sind, beispielsweise in den Sitzen. Die Gehäuse können geradlinig oder gebogen ausgeführt sein.

Die Halbschalen des Gehäuses sind bei der eingangs geschilderten Ausführungsform durch die einrastenden Elemente leicht zusammenzufügen. Es werden dazu keine Werkzeuge und keine zusätzlichen Befestigungsteile benötigt. Wenn die Schließteile der einen Halbschalen die Vorsprünge der anderen Halbschale in Montageposition umgreifen, ist das Gehäuse verschlossen. Beim Zusammenfügen der beiden Halbschalen müssen dieselben allerdings genau positioniert werden, damit die Schließteile auch tatsächlich über die entsprechenden Vorsprünge gedrückt werden können.

Der Erfindung liegt die Aufgabe zugrunde, das eingangs geschilderte Gehäuse so zu gestalten, daß sein Zusammenbau weiter vereinfacht werden kann.

Diese Aufgabe wird gemäß der Erfindung dadurch gelöst, daß an jedem der Schließteile zwei mit Abstand parallel zueinander verlaufende, in Richtung der beim Zusammenfügen der Halbschalen durchzuführenden Bewegung von dem rahmenartigen Schließteil abstehende Führungsarme angebracht sind, deren Abstand voneinander der Breite des Vorsprungs entspricht.

Durch die beiden Führungsarme jedes Schließteils einer Halbschale werden die Vorsprünge der anderen Halbschale bereits beim Annähern der beiden Halbschalen aneinander erfaßt. Sobald die Vorsprünge jeweils zwischen den Führungsarmen liegen, ist die richtige Position der beiden Halbschalen relativ zueinander gegeben. Sie brauchen dann nur noch ohne weitere Justierarbeit zusammengedrückt zu werden. Die Schließteile werden dabei quasi zwangsgeführt über die Vorsprünge geschoben, bis sie dieselben in Montageposition umgreifen. Das Gehäuse ist dann zwar lösbar aber fest verschlossen.

Das "Auffinden" der Vorsprünge durch die Führungsarme kann dann weiter erleichtert werden, wenn die freien Enden derselben konisch verjüngt sind. Die Schräge der Verjüngung weist dabei von der zugehörigen Halbschale weg.

Ausführungsbeispiele des Erfindungsgegenstandes sind in den Zeichnungen dargestellt.

Es zeigen:
Fig. 1 und 2 in schematischer Darstellung zwei Ansichten von unterschiedlich geformten Gehäusen nach der Erfindung.
Fig. 3 eine perspektivische Ansicht eines Gehäuses in vergrößerter Darstellung.
Fig. 4 bis 6 drei unterschiedliche Positionen eines für das Gehäuse verwendbaren einrastenden Elements in weiter vergrößerter Darstellung.

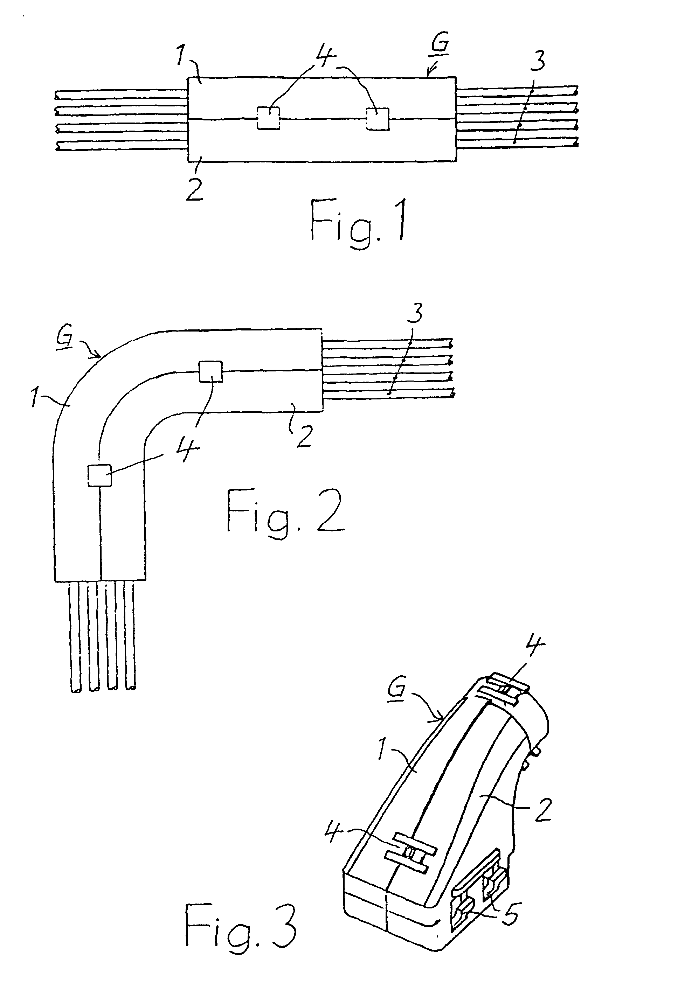

In Fig. 1 ist ein geradliniges, aus zwei Halbschalen 1 und 2 bestehendes Gehäuse G dargestellt. Es dient zur Aufnahme, zur Führung und zum Schutz von elektrischen Leitungen 3. Das Gehäuse G besteht aus Kunststoff, beispielsweise aus Polypropylen. Seine beiden Halbschalen 1 und 2 sind durch einrastende Elemente 4 miteinander verbunden, von denen in Fig. 1 zwei schematisch eingezeichnet sind.

Das Gehäuse G nach Fig. 2 ist gebogen ausgeführt. Es kann an einer Stelle montiert werden, an welcher die Leitungen 3 um beispielsweise 90° gebogen werden. Sonst gilt für das Gehäuse G das gleiche wie es zu Fig. 1 erläutert ist.

Das Gehäuse G kann rohrförmig gestaltet sein, so daß die Halbschalen 1 und 2 einen etwa halbkreisförmigen Querschnitt haben. Es ist aber auch jede andere sinnvolle Querschnittsform für das Gehäuse G verwendbar. Am Gehäuse G können auch Befestigungselemente angebracht sein, mittels derer dasselbe an einem Träger befestigt werden kann. Das in Fig. 3 dargestellte Gehäuse G ist mit Rastelementen 5 als Befestigungselementen ausgerüstet.

Die federnd einrastenden Elemente 4 des Gehäuses G gehen aus den Fig. 3 bis 6 als Ausführungsbeispiel in vergrößerten Darstellungen hervor. Es sind mindestens zwei solche Elemente 4 am Gehäuse G angebracht. Im folgenden wird der Aufbau eines federnd einrastenden Elements 4 beschrieben:

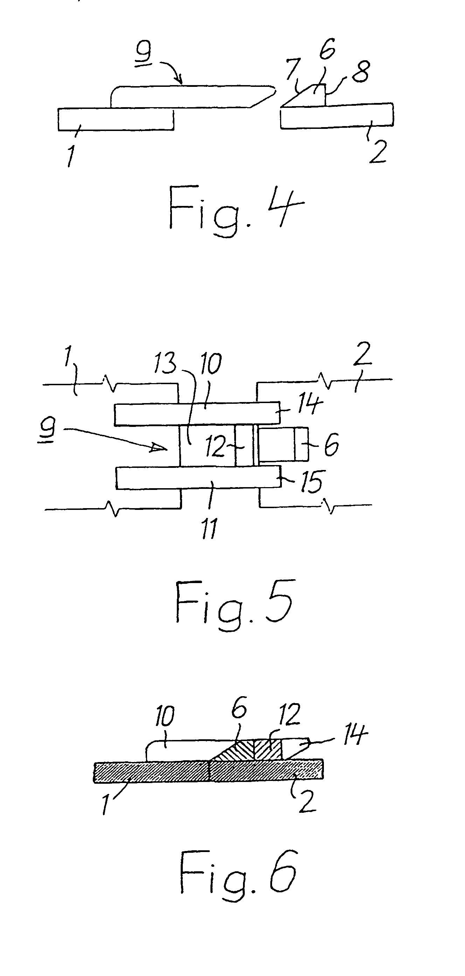

An der Halbschale 2 ist als Teil eines federnd einrastenden Elements 4 ein nach außen abstehender Vorsprung 6 angebracht. Er ist mit Vorteil an einer Seitenkante der Halbschale 2 positioniert. Die von der Seitenkante der Halbschale 2 ausgehende vordere Kante 7 des Vorsprungs 6 verläuft schräg von der Seitenkante weg, während die hintere Kante 8 rechtwinklig von der Halbschale 2 absteht. An der Halbschale 1 ist ein rahmenartiger Schließteil 9 angebracht, der in Montageposition - also bei geschlossenem Gehäuse G - den Vorsprung 6 der Halbschale 2 umgreift, so wie es in Fig. 6 dargestellt ist.

Der Schließteil 9 besteht aus zwei außen an der Halbschale 1 angebrachten Leisten 10 und 11, die mit Abstand parallel zueinander verlaufen und in Richtung der beim Schließen des Gehäuses G gegebenen Bewegungsrichtung über die Seitenkante der Halbschale 1 hinausragen. Sie sind mit Abstand zur Halbschale 1 durch einen Steg 12 miteinander verbunden. Der Schließteil 9 umschließt damit als rahmenartiges Bauteil einen hier rechteckigen bzw. quadratischen Freiraum 13, der an einer Seite von der Seitenkante der Halbschale 1 selbst begrenzt wird. In den Freiraum 13 ragt in Montageposition des Gehäuses G der Vorsprung 6 der Halbschale 2 hinein. Der Steg 12 liegt dann hinter der Kante 8 des Vorsprungs 6.

Am Schließteil 9 sind mit Abstand und parallel zueinander Führungsarme 14 und 15 angebracht, die in der beim Schließen des Gehäuses G gegebenen Bewegungsrichtung über den Schließteil 9 hinaus ragen. Sie haben einen der Breite des Vorsprungs 6 entsprechenden Abstand voneinander und sind im dargestellten Ausführungsbeispiel Verlängerungen der Leisten 10 und 11. Die Führungsarme 14 und 15 dienen zum vereinfachten Zusammenbau des Gehäuses G. Sie erfassen beim Zusammenfügen der beiden Halbschalen 1 und 2 den jeweiligen Vorsprung 6 der Halbschale 2 schon vor dem eigentlichen Schließvorgang. Wenn der Vorsprung 6 zwischen den Führungsarmen 14 und 15 liegt, haben die Halbschalen 1 und 2 ihre richtige Position zueinander. Sie brauchen dann nur noch zusammengedrückt zu werden. Ein seitliches Ausweichen ist nicht möglich. Beim Zusammendrücken der beiden Halbschalen 1 und 2 wird der Steg 12 des Schließteils 9 durch die schräge Kante 7 des Vorsprungs 6 nach oben gedrückt. Er schnappt dann hinter dem Vorsprung 6 ein.

Das "Auffinden" der Vorsprünge 6 kann noch dadurch erleichtert werden, daß die freien Enden der Führungsarme 14 und 15 konisch verjüngt ausgeführt sind, mit einer von der zugehörigen Halbschale wegweisenden Schräge.

Vorsprung 6 und zugehöriger Freiraum 13 sind im beschriebenen Ausführungsbeispiel rechteckig dargestellt. Sie können auch eine andere sinnvolle geometrische Form haben. Die Vorsprünge 6 können auch an der Halbschale 1 angebracht sein, so daß die Schließteile 9 sich dann an den Halbschalen 2 befinden. Es ist auch möglich, jeweils korrespondierend sowohl Vorsprünge 6 als auch Schließteile 9 an beiden Halbschalen 1 und 2 anzubringen.

## Patentansprüche

1. Gehäuse aus Kunststoff zur Aufnahme von Leitungen (3) bestehend aus zwei Halbschalen (1,2) die durch mindestens zwei einrastende Elemente (4) lösbar miteinander verbindbar sind, bei welchem die einrastenden Elemente jeweils aus einem an einer ersten Halbschale angebrachten, nach außen abstehenden Vorsprung (6) sowie aus einem korrespondierenden, an der zweiten Halbschale (1) außen angebrachten rahmenartigen Schließteil (9) bestehen, dessen eine Begrenzung von der Halbschale selbst gebildet ist und der in Montageposition den Vorsprung der ersten Halbschale (2) umgreift, **dadurch gekennzeichnet, daß** an jedem der Schließteile (9) zwei mit Abstand parallel zueinander verlaufende, in Richtung der beim Zusammenfügen der Halbschalen (1,2) durchzuführenden Bewegung von dem rahmenartigen Schließteil abstehende Führungsarme (14,15) angebracht sind, deren Abstand voneinander der Breite des Vorsprungs (6) entspricht.

2. Gehäuse nach Anspruch 1, **dadurch gekennzeichnet, daß** die freien Enden der Führungsarme (14,15) konisch verjüngt sind, mit von der zugehörigen Halbschale wegweisender Schräge.

## Claims

1. A housing made of plastic for receiving lines (3), comprising two half shells (1,2) which are connectable to each other by at least two detachable snap elements (4), wherein the snap elements respecticely comprise a projection (6) extending to the outside which is fastened to a first of the half shells and a frame like locking element (9) which is located at the outer surface of the second half shell (1) and limited by the same and which in mounting position embraces the projection of the first half shell (2), **characterized in that** each locking element (9) comprises two guiding ribs (14,15) which project from the frame like locking element, which are arranged parallel to each other, which extend into the direction of the closing movement of the half shells (1,2) and which are separated from each other in a distance corresponding to the width of the projection (6).

2. A housing according to claim 1, **characterized in that** the free ends of the guiding ribs (14,15) are tapered conically with a slope that shows away from the corresponding half shall.

## Revendications

1. Une boîte en matierè plastic pour la réception des lignes (3), composée de deux semi-bols (1,2), qui sont assemblés l'un avec l'autre par deux éléments à s'enclencher détachable au moins, dans lequels les éléments à s'enclencher sont composés d'un rebord (6) qui est fixé à un premiér semi-bol et sont écartés vers l'extérieur et d'une fermeture (9) en form de châssis qui est fixé a l'autre semi-bol (1) qui est limité d'un part par le semi bol le même et qui, en position de montage, entoure le rebord du premier semi bol (2), **charactérisé par le fai**t que à chaque fermeture (9) deux bras de guidage (14,15) sont fixés qui avec distance sont parallel l'un avec l'autre et montrent à la direction de mouvement pendant l'assemblage des semi-bols (1,2), qui sont écartés de la fermeture en forme de chassis et qui ont une distance l'un de l'autre qui correspond à la largeur du rebord (6).

2. Une boîte selon revendication 1, **charactérisé par le fait** que les extrémités libres des bras de guidage (14,15) sont diminuées conique avec du semi-bol correspondent.
